# FASCICULE DE BREVET EUROPEEN

(11) **EP 2 559 638 B1**
(45) Date de publication et mention de la délivrance du brevet: **24.02.2016**
(21) Numéro de dépôt: 12179745.0
(22) Date de dépôt: 08.08.2012
(51) Int. Cl.: B65G 15/44, B65G 47/244, B65G 47/68, B65G 47/31

(54) **Dispositif de séparation de fruits**
Vorrichtung zum Trennen von Früchten
Device for separating pieces of fruit

(30) Priorité: 16.08.2011 AU 2011903264
(43) Date de publication de la demande: 20.02.2013
(73) Titulaire: MAF Agrobotic, 82000 Montauban (FR)
(72) Inventeur: Morley, Bruce Thomas, Buninyong, Victoria VIC 3357 (AU)
(74) Mandataire: Cabinet BARRE LAFORGUE & associés

(56) Documents cités:
- DE-C- 941 477
- DE-U- 1 916 767
- FR-A1- 2 725 704
- JP-A- 1 051 177
- JP-A- 8 301 435
- US-A- 3 462 001
- US-A1- 2007 068 772

## Description

L'invention concerne un dispositif de séparation destiné à être utilisé avec équipement de manutention de fruits et, en particulier, avec une unité de tri telle qu'une calibreuse qui comprend au moins un convoyeur présentant des supports de fruit qui transportent chacun un fruit destiné à être tourné devant une zone photographique, pesé dans une zone de pesage et puis éjecté dans des bennes positionnées de façon appropriée en fonction des caractéristiques du fruit telles qu'elles sont déterminées par les images prises dans la zone photographique et le poids enregistré dans la zone de pesage.

Dans tout le texte, le terme « fruit » englobe des fruits partiellement sphériques et des légumes, tels que des agrumes, des pommes, des pommes de terre, des tomates et des articles de forme similaire.

Un dispositif de séparation est traditionnellement utilisé pour fournir les fruits alignés en une seule file à chaque convoyeur d'un équipement de manutention de fruits. Les dispositifs de séparation connus comprennent habituellement deux courroies agencées dans une configuration en V pour fonctionner à des vitesses différentes pour faire tourner les fruits et aider les fruits à former un seul alignement prêt pour le transfert sur l'équipement de manutention de fruits.

Les fruits ne se déplacent pas à la vitesse moyenne des deux courroies mais à une vitesse comprise entre la vitesse des deux courroies. Lorsque la distribution aux courroies en V est maximisée, une file continue de fruits se forme, la différence entre la taille moyenne des fruits et le pas des supports de fruit du convoyeur de la calibreuse impliquant que la vitesse du dispositif de séparation soit ralentie pour empêcher la suralimentation du convoyeur de la calibreuse. En conséquence, lorsqu'un fruit est transféré du dispositif de séparation à la calibreuse, il y a communément une différence de vitesse qui peut entraîner l'endommagement du fruit en raison de l'impact avec le support de fruit.

En outre, il n'y a aucune maîtrise de l'espacement entre les fruits dans une rangée. Ainsi, on obtient usuellement soit une rangée continue de fruits en contact les uns avec les autres, soit, si l'alimentation d'entrée est réduite, une formation de groupes de fruits se touchant avec des espaces entre ceux-ci. Dans d'autres cas, il est nécessaire de réduire la vitesse des courroies du dispositif de séparation pour empêcher une suralimentation de la calibreuse qui a souvent pour résultat le fait que deux fruits ou plus (doublons) sont déposés dans chaque support de fruit, empêchant ainsi le triage correct des fruits. Une conséquence du ralentissement des vitesses des courroies du dispositif de séparation pour empêcher des doublons est une augmentation correspondante du différentiel de vitesse entre la calibreuse et le fruit lorsqu'il quitte le dispositif de séparation, et donc une augmentation des forces d'impact sur le fruit. La vitesse optimum pour une séparation satisfaisante des fruits en une seule rangée n'est pas toujours la même que la vitesse du convoyeur de la calibreuse, ce qui rend impossible en pratique le fonctionnement des courroies du dispositif de séparation à des vitesses qui correspondent à la vitesse du convoyeur de la calibreuse. JP 08301435 décrit le préambule de la revendication 1.

L'invention vise à résoudre ces problèmes.

Selon un aspect, l'invention concerne donc un procédé de séparation conforme à la revendication 1.

L'invention concerne également un procédé de séparation avantageusement caractérisé par les caractéristiques définies dans la revendication dépendante 2.

L'invention s'étend à un dispositif de séparation selon la revendication 3. Elle s'étend également à un dispositif de séparation avantageusement caractérisé par les caractéristiques définies dans les revendications 4 à 11.

L'invention s'étend à un équipement de manutention de fruits selon la revendication 12. Elle s'étend également à un équipement de manutention de fruits avantageusement caractérisé par les caractéristiques définies dans les revendications 13 à 15.

Dans tout le texte, l'expression « au moins sensiblement » indique, de façon habituelle, qu'une caractéristique structurelle telle qu'une valeur, ou fonctionnelle, ne doit pas être prise comme marquant une discontinuité abrupte, qui n'aurait pas de sens physique, mais couvre non seulement cette structure ou cette fonction, mais également des variations légères de cette structure ou de cette fonction qui produisent, dans le contexte technique considéré, un effet de même nature, sinon de même degré.

En particulier, avantageusement et selon l'invention la deuxième paire de courroies prolonge une première paire de courroies qui la rejoint de façon à recevoir des fruits alignés par ladite première paire de courroies, et la deuxième paire de courroies aboutit au convoyeur de façon à y transférer des fruits à une vitesse correspondant au moins sensiblement à - notamment similaire à ou égale à- celle des supports individuels du convoyeur de l'équipement de manutention (calibreuse). Avantageusement et selon l'invention les courroies de la deuxième paire de courroies sont entraînées au moins sensiblement à la même vitesse l'une par rapport à l'autre.

En outre, lesdits moyens d'absorption d'énergie sont adaptés pour freiner -notamment arrêter- la rotation des fruits impartie par la première paire de courroies qui aboutit à la deuxième paire de courroies. Lesdits moyens d'absorption d'énergie comprennent avantageusement une pluralité de pointes flexibles appelées « doigts », s'étendant en saillie vers le haut par rapport à la surface des courroies de la deuxième paire de courroies.

L'invention s'étend également à un procédé de séparation mis en oeuvre dans un dispositif de séparation selon l'invention. Elle s'étend également à un dispositif de séparation et à un procédé de séparation caractérisés en combinaison par tout ou partie des caractéristiques mentionnées ci-dessus ou ci-après.

Un mode de réalisation de la présente invention va à présent être décrit, à titre d'exemple seulement, en référence aux dessins joints sur lesquels :
- la figure 1 est une vue en plan d'un dispositif de séparation fournissant des fruits à un convoyeur manipulateur de fruit,
- la figure 2 est une vue latérale du dispositif de séparation et du convoyeur,
- la figure 3 est une vue d'extrémité du dispositif de séparation et du convoyeur,
- la figure 4 est une vue en perspective du dispositif de séparation et du convoyeur,
- la figure 5 est une vue en perspective d'une courroie faisant partie du dispositif de séparation,

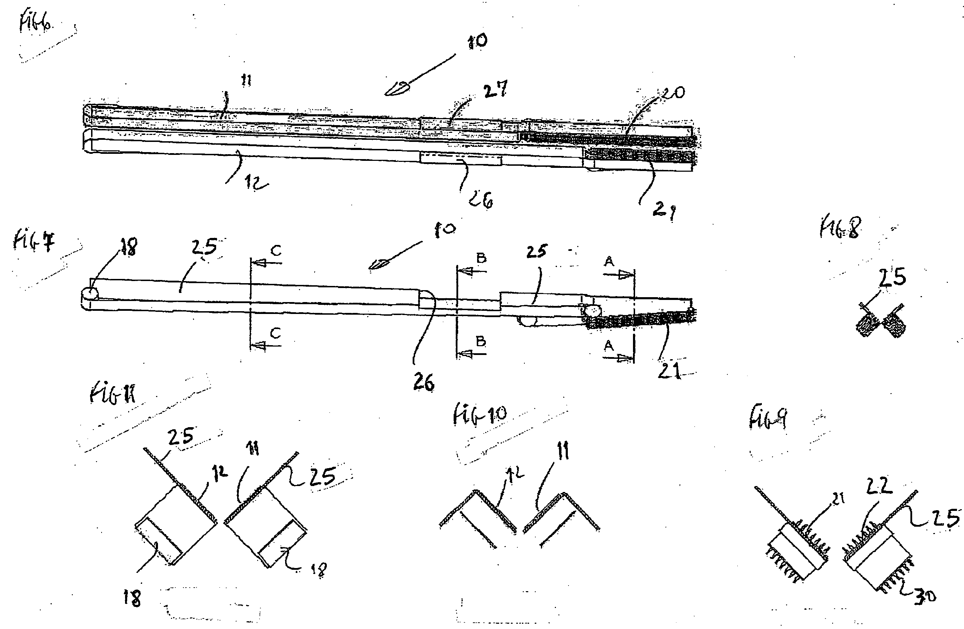

- la figure 6 est une vue en plan du dispositif de séparation,
- la figure 7 est une vue en élévation latérale du dispositif de séparation,
- la figure 8 est une vue en élévation d'extrémité du dispositif de séparation,
- la figure 9 est une vue en coupe transversale prise le long de la ligne A-A de la figure 7,
- la figure 10 est une vue en coupe transversale prise le long de la ligne B-B de la figure 7, et
- la figure 11 est une vue en coupe transversale prise le long de la ligne C-C de la figure 7.

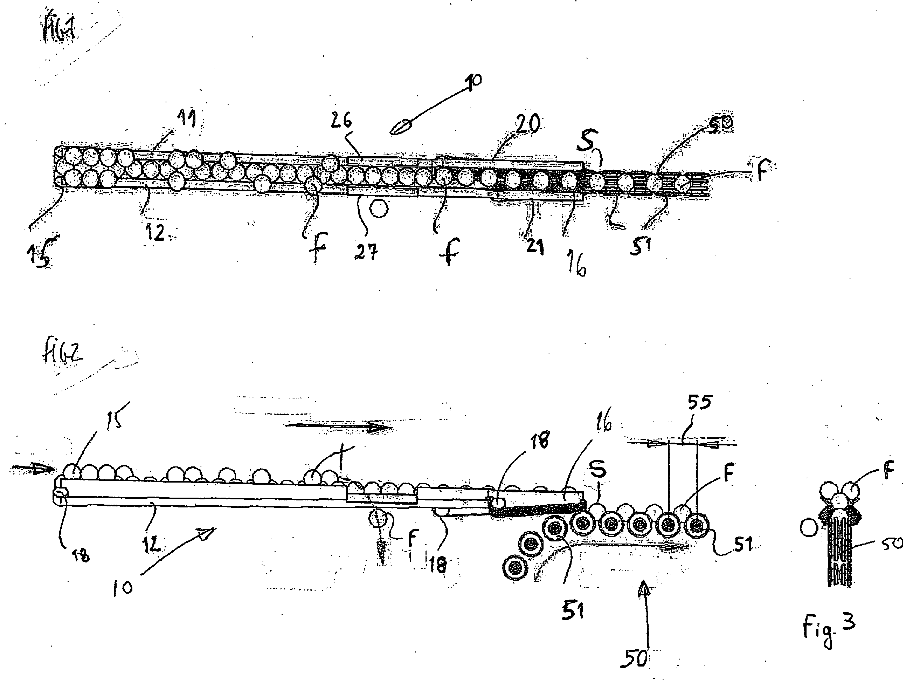

Les figures 1 à 3 représentent un dispositif de séparation 10 rejoignant l'entrée d'un équipement 50 de manutention de fruits comprenant une série de supports individuels de fruit formés de rouleaux espacés 51 qui sont entraînés à défilement continu par un convoyeur autour d'une boucle fermée sans fin. Le début S du convoyeur est représenté sur le côté droit de la figure 2 et l'objectif du dispositif de séparation 10 est de fournir un seul fruit f dans l'espace entre chaque paire de rouleaux 51 successifs. Le dispositif de séparation 10 comprend une première paire de courroies de convoyage 11, 12, agencées selon une orientation en forme de V, qui rejoint une deuxième paire de courroies 20, 21, également agencées dans une configuration en forme de V. Le dispositif de séparation 10 comporte un début commun ou zone d'alimentation d'entrée 15, et une sortie commune ou zone d'alimentation de sortie 16.

La première paire de courroies comprend une courroie 11 par exemple de 3 m de longueur en association avec une courroie 12 de 3,25 m de longueur. Ces courroies 11, 12 rejoignent celles la deuxième paire, respectivement, la courroie la plus courte 11 de la première paire de courroies rejoignant une courroie 20 qui est la plus longue courroie de la deuxième paire de courroies. Les courroies 20, 21 de la deuxième paire de courroies prolongent longitudinalement et continûment les courroies de la première paire de courroies. Les courroies 20, 21 de la deuxième paire de courroies mesurent par exemple respectivement 1 m et 0,75 m de longueur, avec pour résultat une longueur totale du dispositif de séparation 10 de 4 m et une jonction décalée longitudinalement (échelonnée) entre les première et deuxième paires de courroies. Chaque courroie 11, 12, 20, 21 est agencée à 45° et mesure par exemple environ 40 mm de large. Un espace est ménagé à la base du V, par exemple approximativement de 10 mm. La largeur de chaque courroie est choisie de sorte que les paires de courroies contiennent un seul fruit mais ne sont pas assez larges pour qu'un fruit, appelé « doublon », se déplace vers le haut des côtés du V entre les fruits qui se suivent et se touchent.

Il est entendu que l'angle des courroies et la largeur et la longueur des courroies peuvent, dans certaines conceptions, être modifiés pour s'adapter à différents types, tailles et formes de fruit. Chaque courroie est maintenue selon une boucle fermée par des rouleaux 18, 19 à chaque extrémité de la courroie. Un plus grand rouleau d'entraînement 18 est positionné à l'extrémité d'alimentation d'entrée 15, un plus petit rouleau 19 libre étant positionné à l'extrémité d'alimentation de sortie 16. Le rouleau d'entraînement 18 est entraîné par un moteur électrique (non représenté) par l'intermédiaire d'un dispositif de commande de vitesse.

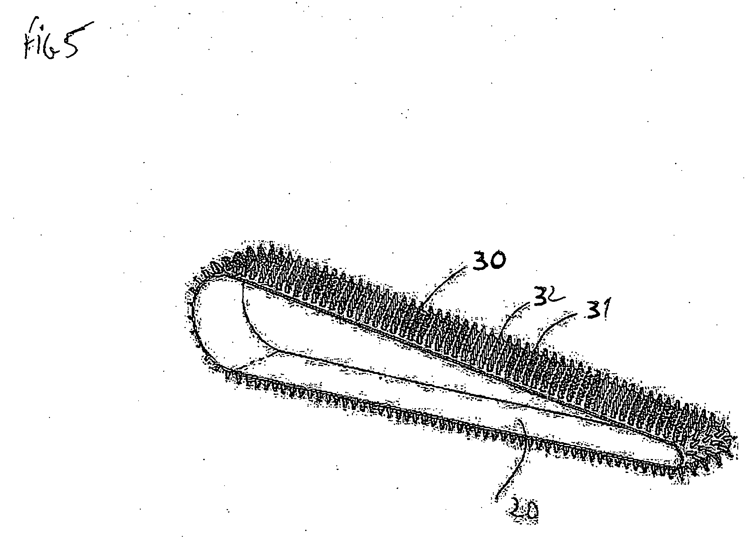

Les courroies 11, 12 de la première paire sont fabriquées de façon à définir une surface de convoyage plate lisse en caoutchouc ou plastique. Les courroies de la deuxième paire de courroies 20, 21 présentent un état de surface adapté pour former des moyens d'absorption d'énergie aptes à freiner la rotation des fruits qu'elles reçoivent. Dans l'exemple, les courroies de la deuxième paire de courroies 20, 21 sont des courroies à doigts, c'est à dire des courroies en caoutchouc ou plastique qui comportent une pluralité de doigts espacés 30 qui sont des dents en caoutchouc flexibles qui s'étendent en saillie vers le haut sur environ 8 mm à partir de la surface de la courroie. Comme cela est représenté sur la figure 5, les doigts 30 sont agencés selon des rangées 31, 32 espacées avec une légère inclinaison d'un côté à l'autre de la courroie 20 ou 21.

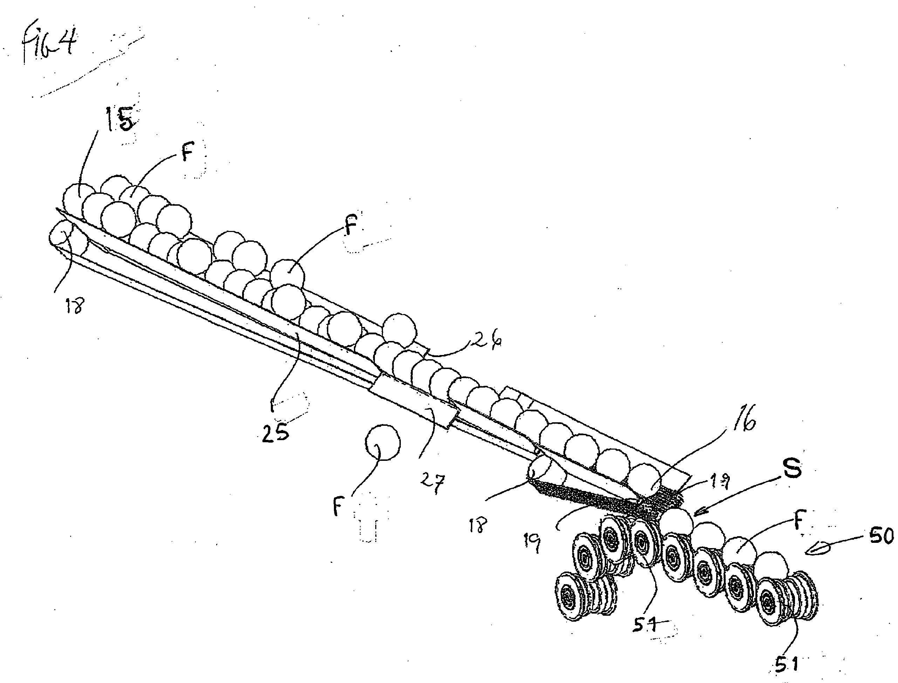

Comme cela est représenté sur la figure 4, la première paire de courroies est positionnée dans un bâti 25 en forme de V qui comporte des ouvertures oblongues 26, 27 espacées sur chacun des deux côtés du bâti 25. De cette manière, dans la situation où des fruits ne sont pas séparés individuellement et restent dans une configuration de doublon, le fruit en trop f tombe latéralement à travers l'espace défini par l'ouverture 26 ou 27, de sorte qu'il est peu probable qu'un doublon atteigne les rouleaux 51.

Les courroies de la première paire de courroies 11, 12 sont commandées pour se déplacer à des vitesses différentes l'une de l'autre pour faire tourner les fruits f sur eux-mêmes pour faire en sorte que, comme cela est représenté sur la figure 4, les fruits forment une seule file. Les vitesses sont choisies en fonction du diamètre moyen des fruits f et du pas 55 des rouleaux 51. Les courroies de la deuxième paire de courroies 20, 21 sont entraînées toutes les deux à la même vitesse, qui est aussi la même vitesse que les rouleaux 51. En fin de compte, le dispositif de séparation 10 est conçu de sorte que les fruits f quittant le dispositif de séparation 10 se déplacent à la même vitesse que les rouleaux 51, ce qui signifie qu'il n'y a aucune force d'impact due soit à la décélération soit à l'accélération des fruits f lorsqu'ils quittent le dispositif de séparation 10 pour reposer sur les supports 50 individuels, entre les rouleaux 51.

Le dispositif de séparation 10 décrit ci-dessus est particulièrement conçu pour être utilisé avec un équipement de manutention de fruits à très grande vitesse, à savoir un équipement qui peut fonctionner à des vitesses de l'ordre de 20 supports individuels de fruit ou coupelles par seconde.

### Avantages

L'ajout de la deuxième paire de courroies en « V » permet que les courroies de la première paire de courroies en « V » soient commandées encore à des vitesses différentes l'une de l'autre. Ceci facilite la formation d'une seule rangée de fruits, alors que les courroies de la deuxième paire de courroies en « V » peuvent être commandées à des vitesses similaires ou identiques l'une par rapport à l'autre, éliminant l'incertitude sur la vitesse des fruits due aux deux courroies se déplaçant à des vitesses différentes. Ceci procure une maîtrise précise de la vitesse des fruits lorsqu'ils sont transférés à l'équipement de manutention de fruits (calibreuse).

Les courroies de la deuxième paire de courroies en « V » peuvent être commandées à une vitesse similaire ou identique à celle de la calibreuse, réduisant ou éliminant ainsi la différence de vitesse entre les fruits sur le dispositif de séparation et les rouleaux/coupelles de la calibreuse, et éliminant tout impact sur les fruits. La vitesse des courroies de la deuxième paire de courroies en « V » peut être ajustée à la même vitesse que la calibreuse, et les fruits sont alors efficacement stationnaires par rapport à la calibreuse au point de transfert depuis le dispositif de séparation à la calibreuse, indépendamment de la vitesse de la calibreuse. Cette caractéristique est d'autant plus importante que l'on tente de faire fonctionner la calibreuse à des vitesses plus élevées.

En utilisant au moins deux paires de courroies en « V », la première paire de courroies en « V » régule efficacement la vitesse d'écoulement des fruits sur la calibreuse, alors que la deuxième paire de courroies en « V » commande la vitesse du fruit au point de transfert à la calibreuse.

En outre, lorsque l'on connaît le diamètre moyen des fruits à partir d'un retour d'information provenant de la calibreuse, il est possible de commander avec précision à la fois la vitesse d'écoulement des fruits et l'espacement des fruits lorsqu'ils sont transférés à la calibreuse, empêchant ainsi la suralimentation de la calibreuse tout en permettant l'optimisation du pourcentage de remplissage des rouleaux/coupelles. Ceci est réalisé en fonction de la manière selon laquelle il est possible de créer un seule rangée de fruits, se touchant tous ou à proximité les uns des autres sur la première paire de courroies en « V », et en commandant ensuite les vitesses de la deuxième paire de courroies en « V » (ou la vitesse de la calibreuse) de telle sorte que le rapport entre la vitesse moyenne de la première paire de courroies en « V » et la deuxième paire de courroies en « V » soit fondé sur le rapport entre la taille moyenne des fruits et le pas des coupelles sur la calibreuse.

L'utilisation de doigts ou d'autres moyens similaires pour aider à empêcher les fruits de rouler sur la deuxième paire de courroies en « V » aide à maintenir un espace entre les fruits individuels, cet espace étant créé lorsque les fruits sont transférés de la première paire de courroies en « V » plus lente à la deuxième paire de courroies en « V » plus rapide. Les doigts servent également à amortir la force sur le fruit lorsqu'il accélère.

En utilisant des courroies en « V » de longueurs différentes dans chaque paire pour créer un étagement dans le transfert entre la première paire de courroies en « V » et la deuxième paire de courroies en « V », et en faisant en sorte que la plus longue de la première paire de courroies en « V » soit la plus rapide des paires de courroies, l'accélération des fruits se produit en deux étapes, ce qui a pour résultat une manutention plus douce des fruits.

La largeur étroite des courroies et la présence de l'espace dans le côté du bâti de courroies en « V » entraîne l'élimination des « doublons » de fruits, garantissant qu'il n'y a qu'une seule rangée de fruits à l'endroit du transfert à la deuxième paire de courroies en « V » et, ensuite, au niveau du convoyeur de la calibreuse.

L'invention peut faire l'objet de nombreuses variantes par rapport au mode de réalisation représenté sur les figures et décrit ci-dessus. En particulier, les supports individuels de fruit (chaque support recevant un fruit unique) de l'équipement de manutention peuvent faire l'objet de nombreuses variantes (coupelles, mains...) ; rien n'empêche de prévoir plusieurs tronçons différents successifs de « première » paires de courroies en amont de ladite deuxième paire de courroies alimentant l'équipement de manutention ; les doigts flexibles freinant la rotation des fruits sur eux-mêmes prévus à la surface des courroies de la deuxième paire de courroies peuvent être complétés et/ou remplacés par d'autres moyens similaires permettant de freiner cette rotation, par exemple un matériau et/ou un état de surface approprié ; plusieurs dispositifs de séparation selon l'invention peuvent être juxtaposés latéralement pour alimenter plusieurs lignes parallèles de convoyage comprenant chacune des supports individuels de fruits entraînés à défilement continu...

## Revendications

1. Procédé de séparation mis en oeuvre dans un dispositif de séparation utilisé avec un équipement de manutention de fruits comprenant des supports (51) de fruit espacés entraînés à une vitesse prédéterminée, le dispositif de séparation alignant les fruits en une seule file pour leur transfert aux supports (51) de fruit, le dispositif de séparation comprenant au moins une première paire (11, 12) de courroies agencées selon une formation en V et se déplaçant à des vitesses différentes,
le dispositif de séparation comportant une deuxième paire (20, 21) de courroies agencées selon une formation en V,
la deuxième paire (20, 21) de courroies prolongant la première paire (11, 12) de courroies qui la rejoint, **caractérisé en ce que**
la deuxième paire (20, 21) de courroies est dotée de moyens (30) d'absorption d'énergie freinant la rotation des fruits,
**en ce que** la deuxième paire (20, 21) de courroies transfère les fruits qu'elle transporte aux supports (51) de fruit au moins sensiblement à la vitesse d'entraînement des supports (51) de fruit, les fruits étant transférés aux supports (51) de fruit en une seule file tout en se déplaçant à la même vitesse que les supports (51) de fruit.

2. Procédé selon la revendication 1, **caractérisé en ce que** les courroies de la deuxième paire (20, 21) de courroies sont entraînées à une vitesse qui est plus rapide que la vitesse de chacune des courroies de la première paire (11, 12) de courroies.

3. Dispositif de séparation alignant des fruits en une seule file pour leur transfert à des supports (51) de fruit d'un équipement de manutention de fruits entraînés à une vitesse prédéterminée, le dispositif de séparation comprenant au moins une première paire (11, 12) de courroies agencées selon une formation en V et se déplaçant à des vitesses différentes,
comportant une deuxième paire (20, 21) de courroies agencées selon une formation en V, la deuxième paire (20, 21) de courroies prolongeant la première paire (11, 12) de courroies qui la rejoint, **caractérisé en ce**
**que** la deuxième paire (20, 21) de courroies comporte des moyens (30) d'absorption d'énergie aptes à freiner la rotation des fruits,
et en ce que le dispositif comprend des moyens pour commander la vitesse de toutes les courroies (11, 12, 20, 21), et en ce que ces moyens sont aptes à entraîner les courroies de la deuxième paire (20, 21) de courroies au moins sensiblement à la vitesse d'entraînement des supports (51) de fruit de l'équipement de manutention de fruits, la deuxième paire (20, 21) de courroies transférant les fruits qu'elle transporte aux supports (51) de fruit au moins sensiblement à la vitesse d'entraînement des supports (51) de fruit, les fruits étant transférés aux supports (51) de fruit en une seule file tout en se déplaçant à la même vitesse que les supports (51) de fruit.

4. Dispositif selon la revendication 3, **caractérisé en ce que** les moyens (30) d'absorption d'énergie comprennent une pluralité de pointes flexibles s'étendant en saillie vers le haut par rapport aux courroies (20, 21).

5. Dispositif selon la revendication 4, dans lequel les pointes (30) sont agencées selon des rangées (31, 32) espacées s'étendant d'un côté à l'autre de la courroie.

6. Dispositif selon la revendication 5, **caractérisé en ce que** les rangées (31, 32) sont orientées inclinées d'un côté à l'autre de la courroie.

7. Dispositif selon l'une des revendications 3 à 6, **caractérisé en ce que** la première paire (11, 12) de courroies et la deuxième paire (20, 21) de courroies sont agencées avec un décalage longitudinal des zones de transfert entre les courroies de la première paire (11, 12) de courroies et les courroies de la deuxième paire (20, 21) de courroies.

8. Dispositif selon l'une des revendications 3 à 7, **caractérisé en ce que** la première paire (11, 12) de courroies comprend des parois latérales inclinées, au moins une paroi latérale possédant un espace (26, 27) latéral à travers lequel des fruits peuvent s'échapper du dispositif de séparation.

9. Dispositif selon la revendication 8, **caractérisé en ce que** les deux parois latérales comportent un espace (26, 27) latéral.

10. Dispositif selon l'une des revendications 3 à 9, **caractérisé en ce que** les moyens pour commander la vitesse de toutes les courroies (11, 12, 20, 21) sont aptes à entraîner les courroies de la deuxième paire (20, 21) de courroies à une vitesse qui est plus rapide que la vitesse de chacune des courroies de la première paire (11, 12) de courroies.

11. Dispositif selon l'une des revendications 3 à 10, **caractérisé en ce que** les courroies sont inclinées à approximativement 45° avec un espace à la base des courroies.

12. Équipement de manutention de fruits comprenant des supports (51) de fruit espacés entraînés à une vitesse prédéterminée, et un dispositif de séparation alignant les fruits en une seule file pour leur transfert aux supports (51) de fruit, le dispositif de séparation comprenant au moins une première paire (11, 12) de courroies agencées selon une formation en V et se déplaçant à des vitesses différentes,
le dispositif de séparation comportant une deuxième paire (20, 21) de courroies agencées selon une formation en V,
la deuxième paire (20, 21) de courroies prolongeant la première paire (11, 12) de courroies qui la rejoint,
**caractérisé en ce que** la deuxième paire (20, 21) de courroies comporte des moyens (30) d'absorption d'énergie aptes à freiner la rotation des fruits,
**en ce que** le dispositif de séparation comprend des moyens pour commander la vitesse de toutes les courroies (11, 12, 20, 21),
et **en ce que** ces moyens sont aptes à entraîner les courroies de la deuxième paire (20, 21) de courroies au moins sensiblement à la vitesse d'entraînement des supports (51) de fruit de l'équipement de manutention de fruits, la deuxième paire (20, 21) de courroies transférant les fruits qu'elle transporte aux supports (51) de fruit au moins sensiblement à la vitesse d'entraînement des supports (51) de fruit, les fruits étant transférés aux supports (51) de fruit en une seule file tout en se déplaçant à la même vitesse que les supports (51) de fruit.

13. Équipement selon la revendication 12, **caractérisé en ce que** les moyens (30) d'absorption d'énergie comprennent une pluralité de pointes flexibles s'étendant en saillie vers le haut par rapport aux courroies (20, 21).

14. Équipement selon la revendication 13, dans lequel les pointes (30) sont agencées selon des rangées (31, 32) espacées s'étendant d'un côté à l'autre de la courroie.

15. Équipement selon la revendication 14, dans lequel les rangées (31, 32) sont orientées inclinées d'un côté à l'autre de la courroie.

## Patentansprüche

1. Trennverfahren, das in einer Trennvorrichtung angewandt wird, das mit einer Obstförderanlage verwendet wird, das räumlich getrennte Obsthalter (51) umfasst, die mit einer vorbestimmten Geschwindigkeit angetrieben werden, wobei die Trennvorrichtung das Obst für dessen Übergabe in die Obsthalter (51) in einer einzigen Reihe anordnet, wobei die Trennvorrichtung zumindest ein erstes Paar (11, 12) an Riemen umfasst, die in einer V-Formation angeordnet sind, und sich mit unterschiedlichen Geschwindigkeiten fortbewegen, wobei die Trennvorrichtung ein zweites Paar (20, 21) an Riemen umfasst, die in einer V-Formation angeordnet sind, wobei das zweite Riemenpaar (20, 21) das erste Riemenpaar (11, 12) weiterführt, das sich ihm anschließt, **dadurch gekennzeichnet, dass** das zweite Riemenpaar (20, 21) mit Mitteln (30) zum Absorbieren von Energie versehen ist, die die Rotation des Obsts bremst,
dadurch, dass das zweite Riemenpaar (20, 21) das Obst, das es zu den Obsthaltern (51) transportiert, zumindest in etwa mit der Antriebsgeschwindigkeit der Obsthalter (51) übergibt, wobei das Obst den Obsthaltern (51) in einer einzigen Reihe übergeben wird, und sich mit derselben Geschwindigkeit fortbewegt, wie die Obsthalter (51).

2. Verfahren nach Anspruch 1, **dadurch gekennzeichnet, dass** die Riemen des zweiten Riemenpaares (20, 21) mit einer Geschwindigkeit angetrieben werden, die schneller ist, als die Geschwindigkeit eines jeden Riemens des ersten Riemenpaares (11, 12).

3. Trennvorrichtung, die Obst für dessen Übergabe in Obsthalter (51) einer Obstförderanlage in einer einzigen Reihe anordnet, die mit einer vorbestimmten Geschwindigkeit angetrieben werden, wobei die Trennvorrichtung zumindest ein erstes Paar (11, 12) an Riemen umfasst, die in einer V-Formation angeordnet sind, und sich mit unterschiedlichen Geschwindigkeiten fortbewegen, wobei die Trennvorrichtung ein zweites Paar (20, 21) an Riemen umfasst, die in einer V-Formation angeordnet sind, wobei das zweite Riemenpaar (20, 21) das erste Riemenpaar (11, 12) weiterführt, das sich ihm anschließt, **dadurch gekennzeichnet, dass** das zweite Riemenpaar (20, 21) mit Mitteln (30) zum Absorbieren von Energie versehen ist, die in der Lage sind, die Rotation des Obsts zu bremsen,
und dadurch, dass die Vorrichtung Mittel zum Steuern der Geschwindigkeit sämtlicher Riemen (11, 12, 20, 21) umfasst, und dadurch, dass diese Mittel in der Lage sind, die Riemen des zweiten Riemenpaares (20, 21) zumindest in etwa mit der Antriebsgeschwindigkeit der Obsthalter (51) der Obstförderanlage anzutreiben, wobei das zweite Riemenpaar (20, 21) das Obst, das es zu den Obsthaltern (51) transportiert, zumindest in etwa mit der Antriebsgeschwindigkeit der Obsthalter (51) übergibt, wobei das Obst den Obsthaltern (51) in einer einzigen Reihe übergeben wird, und sich mit derselben Geschwindigkeit fortbewegt, wie die Obsthalter (51).

4. Vorrichtung nach Anspruch 3, **dadurch gekennzeichnet, dass** die Mittel (30) zum Absorbieren von Energie eine Vielzahl von flexiblen Spitzen umfassen, die sich im Verhältnis zu den Riemen (20, 21) nach oben vorspringend erstrecken.

5. Vorrichtung nach Anspruch 4, wobei die Spitzen (30) in räumlich getrennten Reihen (31, 32) angeordnet sind, die sich von einer Seite des Riemens zur anderen erstrecken.

6. Vorrichtung nach Anspruch 5, **dadurch gekennzeichnet, dass** die Reihen (31, 32) geneigt von einer Seite des Riemens zur anderen ausgerichtet sind.

7. Vorrichtung nach einem der Ansprüche 3 bis 6, **dadurch gekennzeichnet, dass** das erste Riemenpaar (11, 12) und das zweite Riemenpaar (20, 21) mit einem Längsversatz der Übergabebereiche zwischen den Riemen des ersten Riemenpaares (11, 12) und den Riemen des zweiten Riemenpaares (20, 21) angeordnet sind.

8. Vorrichtung nach einem der Ansprüche 3 bis 7, **dadurch gekennzeichnet, dass** das erste Riemenpaar (11, 12) geneigte Seitenwände umfasst, wobei zumindest eine Seitenwand einen seitlichen Freiraum (26, 27) umfasst, durch den das Obst aus der Trennvorrichtung entweichen kann.

9. Vorrichtung nach Anspruch 8, **dadurch gekennzeichnet, dass** die beiden Seitenwände einen seitlichen Freiraum (26, 27) umfassen.

10. Vorrichtung nach einem der Ansprüche 3 bis 9, **dadurch gekennzeichnet, dass** die Mittel zum Steuern der Geschwindigkeit sämtlicher Riemen (11, 12, 20, 21) in der Lage sind, die Riemen des zweiten Riemenpaares (20, 21) mit einer Geschwindigkeit anzutreiben, die schneller ist, als die Geschwindigkeit eines jeden Riemens des ersten Riemenpaares (11, 12).

11. Vorrichtung nach einem der Ansprüche 3 bis 10, **dadurch gekennzeichnet, dass** die Riemen mit einem Freiraum an der Basis der Riemen um annähernd 45° geneigt sind.

12. Obstförderanlage, das räumlich voneinander getrennte Obsthalter (51) umfasst, die mit einer vorbestimmten Geschwindigkeit angetrieben werden, und eine Trennvorrichtung zum Anordnen des Obsts in einer einzigen Reihe für dessen Übergabe zu den Obsthaltern (51), wobei die Trennvorrichtung zumindest ein erstes Paar (11, 12) an Riemen umfasst, die in einer V-Formation angeordnet sind, und sich mit unterschiedlichen Geschwindigkeiten fortbewegen, und die Trennvorrichtung ein zweites Paar (20, 21) an Riemen umfasst, die in einer V-Formation angeordnet sind, wobei das zweite Riemenpaar (20, 21) das erste Riemenpaar (11, 12) weiterführt, das sich ihm anschließt, **dadurch gekennzeichnet, dass** das zweite Riemenpaar (20, 21) mit Mitteln (30) zum Absorbieren von Energie versehen ist, die in der Lage sind, die Rotation des Obsts zu bremsen,
dadurch, dass die Trennvorrichtung Mittel zum Steuern der Geschwindigkeit sämtlicher Riemen (11, 12, 20, 21) umfasst,
und dadurch, dass diese Mittel in der Lage sind, die Riemen des zweiten Riemenpaares (20, 21) zumindest in etwa mit der Antriebsgeschwindigkeit der Obsthalter (51) der Obstförderanalge anzutreiben, wobei das zweite Riemenpaar (20, 21) das Obst, das es zu den Obsthaltern (51) transportiert, zumindest in etwa mit der Antriebsgeschwindigkeit der Obsthalter (51) fortbewegt, wobei das Obst den Obsthaltern (51) in einer einzigen Reihe übergeben wird, und sich mit derselben Geschwindigkeit fortbewegt, wie die Obsthalter (51).

13. Anlage nach Anspruch 12, **dadurch gekennzeichnet, dass** die Mittel (30) zum Absorbieren von Energie eine Vielzahl von flexiblen Spitzen umfassen, die sich im Verhältnis zu den Riemen (20, 21) nach oben vorspringend erstrecken.

14. Anlage nach Anspruch 13, wobei die Spitzen (30) in räumlich getrennten Reihen (31, 32) angeordnet sind, die sich von einer Seite des Riemens zur anderen erstrecken.

15. Anlage nach Anspruch 14, wobei die Reihen (31, 32) geneigt von einer Seite des Riemens zur anderen ausgerichtet sind.

## Claims

1. Separation method implemented in a separation device used with fruit-handling equipment, comprising spaced-apart fruit supports (51) driven at a predetermined speed, the separation device aligning the fruits in a single file for transfer thereof to the fruit supports (51), the separation device comprising at least one first (11, 12) pair of belts arranged in a V formation and moving at different speeds,
the separation device comprising a second pair (20, 21) of belts arranged in a V formation,
the second pair (20, 21) of belts extending the first pair (11, 12) of belts, which joins it,
**characterised in that** the second pair (20, 21) of belts is provided with energy-absorption means (30) braking the rotation of the fruits,
**in that** the second pair (20, 21) of belts transfers the fruits that it is transporting to the fruit supports (51) at least substantially at the driving speed of the fruit supports (51), the fruits being transferred to the fruit supports (51) in a single file while moving at the same speed as the fruit supports.

2. Method according to claim 1, **characterised in that** belts of the second pair (20, 21) of belts are driven at a speed that is faster than the speed of each of the belts in the first pair (11, 12) of belts.

3. Separation device aligning fruits in a single file for transfer thereof to fruit supports (51) of fruit-handling equipment that are driven at a predetermined speed, the separation device comprising at least one first pair (11, 12) of belts arranged in a V formation and moving at different speeds,
comprising a second pair (20, 21) of belts arranged in a V formation, the second pair (20, 21) of belts extending the first pair (11, 12) of belts, which joins it,
**characterised in that** the second pair (20, 21) of belts comprises energy-absorption means (30) able to brake the rotation of the fruits,
and **in that** the device comprises means for controlling the speed of all the belts (11, 12, 20, 21), and **in that** these means are able to drive the belts of the second pair (20, 21) of belts at least substantially at the speed of driving of the fruit supports (51) of the fruit-handling equipment, the second pair (20, 21) of belts transferring the fruits that it is transporting to the fruit supports (51) at least substantially at the speed of driving of the fruit supports (51), the fruits being transferred to the fruit supports (51) in a single file while moving at the same speed as the fruit supports (51).

4. Device according to claim 3, **characterised in that** the energy-absorption means (30) comprise a plurality of flexible spikes projecting upwards with respect to the belts (20, 21).

5. Device according to claim 4, in which the spikes (30) are arranged in spaced-apart rows (31, 32) extending from one side of the belt to the other.

6. Device according to claim 5, **characterised in that** the rows (31, 32) are oriented inclined from one side of the belt to the other.

7. Device according to one of claims 3 to 6, **characterised in that** the first pair (11, 12) of belts and the second pair (20, 21) of belts are arranged with a longitudinal offset of the transfer zones between the belts in the first pair (11, 12) of belts and the belts in the second pair (20, 21) of belts.

8. Device according to one of claims 3 to 7, **characterised in that** the first pair (11, 12) of belts comprises inclined lateral walls, at least one lateral wall having a lateral space (26, 27) through which fruits can escape from the separation device.

9. Device according to claim 8, **characterised in that** the two lateral walls comprise a lateral space (26, 27).

10. Device according to one of claims 3 to 9, **characterised in that** the means for controlling the speed of all the belts (11, 12, 20, 21) are able to drive the belts in the second pair (20, 21) of belts at a speed that is faster than the speed of each of the belts in the first pair (11, 12) of belts.

11. Device according to one of claims 3 to 10, **characterised in that** the belts are inclined at approximately 45° with a space at the base of the belts.

12. Fruit-handling equipment comprising spaced-apart fruit supports (51) driven at a predetermined speed, and a separation device aligning the fruits in a single file for transfer thereof to the fruit supports (51), the separation device comprising at least one first pair (11, 12) of belts arranged in a V formation and moving at different speeds,
the separation device comprising a second pair (20, 21) of belts arranged in a V formation,
the second pair (20, 21) of belts extending the first pair (11, 12) of belts, which joins it,
**characterised in that** the second pair (20, 21) of belts comprises energy-absorption means (30) able to brake the rotation of the fruits,
**in that** the separation device comprises means for controlling the speed of all the belts (11, 12, 20, 21),
and **in that** these means are able to drive the belts in the second pair (20, 21) of belts at least substantially at the speed of driving of the fruit supports (51) of the fruit-handling equipment, the second pair (20, 21) of belts transferring the fruits that it is transporting to the fruit supports (51) at least substantially at the speed of driving of the fruit supports (51), the fruits being transferred to the fruit supports (51) in a single file while moving at the same speed at the fruit supports (51),

13. Equipment according to claim 12, **characterised in that** the energy-absorption means (30) comprise a plurality of flexible spikes projecting upwards with respect to the belts (20, 21).

14. Equipment according to claim 13, in which the spikes (30) are arranged spaced-apart rows (31, 32) extending from one side of the belt to the other.

15. Equipment according to claim 14, in which the rows (31, 32) are oriented inclined from one side of the belt to the other.
